# EUROPÄISCHE PATENTANMELDUNG

(11) **EP 1 432 146 A1**
(43) Veröffentlichungstag der Anmeldung: **23.06.2004**
(21) Anmeldenummer: 02028515.1
(22) Anmeldetag: 19.12.2002
(51) Int. Cl.: H04B 7/26

(54) **Verfahren zur Interferenzunterdrückung an einem Funkkommunikationsendgerät eines Funkkommunikationssystems**

(71) Anmelder: SIEMENS AKTIENGESELLSCHAFT, 80333 München (DE)
(72) Erfinder: Färber, Michael, 82515 Wolfratshausen (DE); Hofmann, Jürgen, 86504 Merching (DE)

(57) **Zusammenfassung**

Die Erfindung betrifft ein Verfahren zur Interferenzunterdrückung an einem Funkkommunikationsendgerät eines Funkkommunikationssystems. Dabei überwacht das Funkkommunikationsendgerät, das einer ersten Basisstation einer ersten Funkzelle zugeordnet ist, Synchronisationssignale von Basisstationen benachbarter Funkzellen und bestimmt zeitliche Abweichungen der Synchronisationssignale jeder benachbarten Basisstationen zum Synchronisationssignal der ersten Basisstation. Anhand der zeitlichen Abweichung wird jeweils ein Synchronisationsgrad als Maß für die zeitliche Synchronisation einer benachbarten Basisstation zur ersten Basisstation gebildet und abhängig von den Synchronisationsgraden wird am Funkkommunikationsendgerät ein Interferenzunterdrückungsverfahren ausgewählt.

## Beschreibung

Die Erfindung betrifft ein Verfahren zur Interferenzunterdrückung an einem Funkkommunikationsendgerät eines Funkkommunikationssystems.

Es sind Verfahren zur Interferenzunterdrückung bekannt, die entweder als stochastische oder als deterministische Interferenzunterdrückungsverfahren ausgeprägt sind.

Im allgemeinen werden Interferenzunterdrückungsverfahren seitens einer Basisstation eines Funkkommunikationssystems angewendet, da diese Verfahren sowohl hardware- als auch softwareintensiv zu realisieren sind. Derzeit werden jedoch auch Interferenzunterdrückungsverfahren diskutiert, die seitens eines Funkkommunikationsendgeräts zur Anwendung kommen sollen. Derartige Verfahren wurden beispielsweise auf einer Tagung 3GPP TSG GERAN #12, 18.-22. November 2002, Sophia Antipolis, Frankreich, in den Dokumenten "Single Antenna Interference Cancellation (SAIC) - proposed scenarius for evaluation and requirement specification", Ericsson, Nokia, Tdoc GP-022962, Agenda item 7.1.5.9 oder in "SAIC: discussion on standardisation and signalling", Motorola Inc., Tdoc GP-023100, Agenda Item 7.1.5.9, oder in "Simulation Assumptions for GSM SAIC", Motorola, GP-023101, Agenda Item 7.1.5.9, oder in "Single Antenna Interference Cancellation (SAIC): Whitening Process for adjacent interferers", Nortel Networks, GP-023102, Agenda Item 7.1.5.9, oder in "On the Potential Performance Gains of Single-Antenna Interference Cancellation and Ways to Assess it", Intel Corp., TSGG#12(02)3207, Agenda Item 7.1.5.9 oder in "Draft Feasibility Study on Single Antenna Interference Cancellation (SAIC) for GSM Networks", Cingular Wireless, GP-022892, Agenda Items 6.3, 7159, beschrieben.

Diese sowie weitere, hier nicht näher angegebene Verfahren zur Interferenzunterdrückung sind abhängig vom verwendeten Funkkommunikationsstandard bzw. abhängig von der zeitlichen Synchronisation von Basisstationen des Funkkommunikationssystems einzusetzen.

Die vorliegende Erfindung hat zur Aufgabe, ein Verfahren zur Interferenzunterdrückung an einem Funkkommunikationsendgerät eines Funkkommunikationssystems anzugeben.

Die Aufgabe der Erfindung wird durch die Merkmale des Patentanspruchs 1 gelöst. Vorteilhafte Weiterbildungen der Erfindung sind in den Unteransprüchen angegeben.

Der Erfindung liegt die Erkenntnis zugrunde, dass auch bei zeitlich als synchronisiert betrachteten Basisstationen in der Realität Unterschiede bezüglich der Synchronisation auftreten. Der Grund hierfür ist einerseits, dass bei den einzelnen Funkkommunikationsstandards für die Basisstationen lediglich einzuhaltende lokale Synchronisierungsgenauigkeiten vorgegeben werden und dass andererseits bauartbedingte Schwankungen bei lokalen Oszillatoren an einer Basisstation zu Unterschieden in der Synchronisation mehrerer Basisstationen führen. So ergeben sich in der Realität oft sogenannte "Synchronisationsinseln" innerhalb eines Funkkommunikationsnetzes, deren zeitliche Synchronisation von der ideal vorgegebenen mehr oder weniger stark abweichen.

Die vom Teilnehmerendgerät wahrgenommene Synchronisation ist weiterhin durch physikalische Parameter beeinflusst, beispielsweise durch die Mobilität des Funkkommunikationsendgeräts oder durch unterschiedlich wahrgenommene Laufzeiten von Downlinksignalen.

Bei einem Funkkommunikationsnetz, das per Definition als synchron betrachtet wird und bei dem diese Definition auch den Funkkommunikationsendgeräten mitgeteilt wird, ist jedoch entscheidend, wie die zeitliche Synchronisierung vom Funkkommunikationsendgerät selbst wahrgenommen wird.

Mit Hilfe des vorliegenden Verfahrens wird nun am Funkkommunikationsendgerät die dort vorherrschende reale zeitliche Synchronisierung benachbarter Funkzellen bzw. benachbarter Basisstationen zu einer ersten Basisstation, der das Funkkommunikationsendgerät zugeordnet ist, ermittelt.

Zur Beurteilung der Synchronisation wird erfindungsgemäß ein sogenannter "Synchronisationsgrad" für jede der benachbarten Basisstationen als Beurteilungsparameter gewonnen. Basierend auf diesem, die reale Synchronisation repräsentierenden Parameter wird am Funkkommunikationsendgerät ein geeignetes, d.h. ein für die vorgefundene reale Synchronisation optimal anwendbares Interferenzunterdrückungsverfahren ausgesucht und dort verwendet.

Erfindungsgemäß wird beispielsweise bei einem GSM/GERAN-Funkkommunikationssystem im Rahmen des ohnehin durchgeführten "Nachbarzellen-Monitorings" der Synchronisationsgrad ermittelt, indem am Funkkommunikationsendgerät durch Kreuz-Korrelation eines empfangenen SCH-Bursts einer benachbarten Basisstation mit einer vorbekannten Trainingssequenz des SCH-Bursts der benachbarten Basisstation ein "Peak" mit einer entsprechenden, die benachbarte Basisstation repräsentierenden Zeitlage erzeugt wird. Diese repräsentierende Zeitlage wird mit einer Zeitlage eines "Peaks" verglichen, der mit Hilfe der Trainingssequenz des SCH-Bursts derjenigen Basisstation erzeugt wurde, bei der das Funkkommunikationsendgerät derzeit "eingelockt" ist bzw. angemeldet ist. Aus der Differenz der Zeitlagen dieser "Peaks" wird nun auf den Synchronisationsgrad der benachbarten Basisstation zurückgeschlossen bzw. wird der benachbarten Basisstation ein entsprechender Synchronisationsgrad zugeordnet.

Liegen am Funkkommunikationsendgerät derart ermittelte Korrelationspeaks zeitlich übereinander, d.h. Differenz gleich Null, so sind die Basisstationen ideal zueinander zeitlich synchronisiert. Weisen die einzelnen Korrelationspeaks jedoch große zeitliche Unterschiede in ihrem Auftreten auf, so sind die Basisstationen als untereinander nicht zeitlich synchronisiert zu betrachten.

Am Funkkommunikationsendgerät wird eine Tabelle angelegt, in der die basisstationsspezifischen Synchronisierungsgrade abgelegt sind, mit deren Hilfe letztendlich die Auswahl des Interferenzunterdrückungsverfahrens durchgeführt wird.

Der SCH-Burst des SCH-Übertragungskanals beim GSM/GERAN-Funkkommunikationsnetz eignet sich für das erfindungsgemäße Verfahren besonders, da er eine sogenannte "Extended Training Sequence" mit 64 Bits aufweist. Nach Durchführung der Korrelation ergeben sich im Frequenzspektrum deutlich sichtbare und somit genaue "Peaks". Mit Hilfe sogenannter "Encrypted Bits", die ebenfalls im SCH-Burst übertragen werden und die die Kennung der Basisstation repräsentieren, ist eine entsprechende Zuordnung innerhalb der Tabelle möglich.

Neben der idealisierten Aussage, dass benachbarte Basisstationen nicht oder hochgenau synchronisiert sind, werden mit Hilfe des erfindungsgemäßen Verfahrens auch Abstufungen der zeitlichen Synchronisation erkennbar, welche bei der Auswahl des Interferenzunterdrückungsverfahrens entsprechend berücksichtigt werden. Eine Auswahl geeigneter Interferenzunterdrückungsverfahren ist den in der Beschreibungseinleitung zitierten Dokumenten zu entnehmen.

Dabei kommen auch sogenannte "adaptive" Interferenzunterdrückungsverfahren zum Einsatz, die entsprechend der bestimmten Synchronisationsgrade der benachbarten Basisstationen optimiert sind, wobei verschiedene Interferenzunterdrückungsverfahren kombiniert und abhängig vom Synchronisationsgrad der benachbarten Basisstationen angewendet werden.

Der ermittelte reale Synchronisationsgrad am Funkkommunikationsendgerät ist jedoch auch netzwerkseitig von hoher Bedeutung für den Netzwerkbetreiber, weshalb er in einer bevorzugten Ausgestaltung der Erfindung an die Netzwerkseite des Funkkommunikationssystems übertragen wird.

Besonders vorteilhaft ist dieser als zusätzlicher Parameter bei der Zuteilung von Übertragungsressourcen an ein Funkkommunikationsendgerät einsetzbar. So können beispielsweise bei einem Frequency-Reuse von eins bei benachbarten Funkzellen, entsprechende Funkübertragungsressourcen gleicher Trägerfrequenz denjenigen Mobilteilnehmern zugeordnet werden, deren Funkkommunikationsendgeräte zur Durchführung des erfindungsgemäßen Verfahrens vorgesehen sind und die damit entsprechend unanfällig gegenüber Interzell-Interferenzen sind.
Im Gegenzug werden Mobilteilnehmer, die das erfindungsgemäße Verfahren nicht verwenden können, Funkübertragungsressourcen zugeordnet, deren Trägerfrequenz innerhalb benachbarter Basisstationen einen entsprechend höheren Frequency-Reuse aufweist.

Dadurch wird eine bezüglich der Interferenzen optimale Zuordnung von Funkübertragungsressourcen zu Teilnehmern erreicht, wodurch innerhalb von Funkzellen des Funkkommunikationssystems eine erhöhte Teilnehmerdichte erzielbar ist.

Werden adaptive Antennensysteme an einer Basisstation verwendet, so wird eine optimierte Funkzellengrößen-Steuerung bei einer optimierten Übertragungsqualität ermöglicht.

Durch die erfindungsgemäße Rückmeldung des Synchronisierungsgrades an die Netzwerkseite sind Basisstationen mit einer Fehlfunktion der Synchronisation erkennbar und sind entsprechend nachjustierbar.

Mit Hilfe des erfindungsgemäßen Verfahrens, beim dem die am Funkkommunikationsendgerät wahrgenommene zeitliche Synchronisierung an die Netzseite zurückgemeldet wird, wird durch entsprechende Nachjustierung innerhalb des Funkkommunikationsnetzes eine gleichmäßige Synchronisationsgüte einstellbar. Die oben beschriebenen "Synchronisationsinseln" werden in ihrem Auftreten bzw. in ihrer Abweichung von einer vorgebbaren Synchronisation minimiert.

Ebenfalls wird ermöglicht, mit Hilfe der rückgemeldeten Synchronisationsgrade einen Qualitätsreport des Funkkommunikationsnetzes zu erstellen, der beispielsweise netzbetreiberseitig zur Kontrolle bzw. Optimierung des Funkkommunikationsnetzes verwendbar ist.

Im folgenden wird ein Ausführungsbeispiel der vorliegenden Erfindung anhand einer Zeichnung näher erläutert. Dabei zeigt:
- FIG 1: benachbarte Funkzellen mit Basisstationen eines Funkkommunikationssystems zur Anwendung des erfindungsgemäßen Verfahrens, und
- FIG 2: eine Ermittlung von Synchronisationsgraden der in FIG 1 dargestellten Basisstationen.

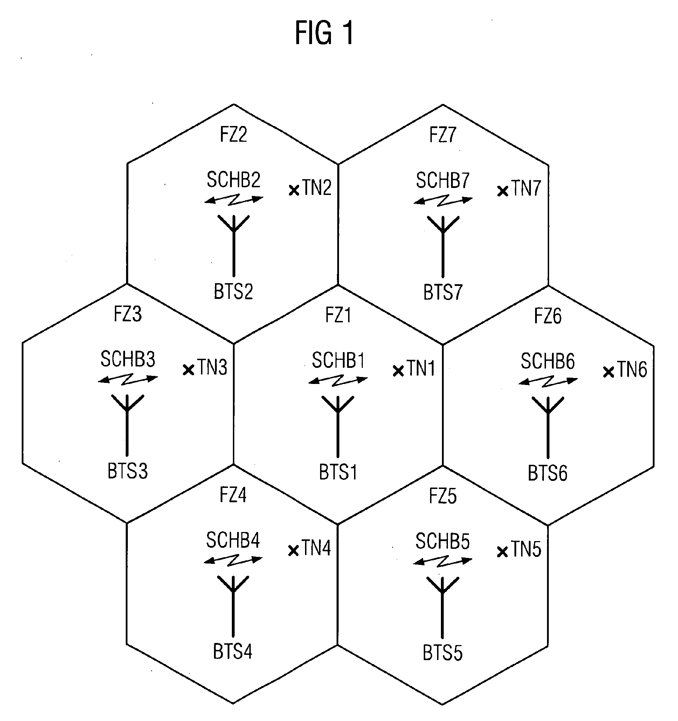

FIG 1 zeigt benachbarte Funkzellen FZ1 bis FZ7 mit Basisstationen BTS1 bis BTS7 eines Funkkommunikationssystems zur Anwendung des erfindungsgemäßen Verfahrens.

Dabei wird im Folgenden ein GSM/GERAN-Mobilfunknetz als Funkkommunikationssystem betrachtet.

Eine erster Teilnehmer TN1 einer ersten Funkzelle FZ1 ist einer ersten Basisstation BTS1 zugeordnet. Die erste Basisstation BTS1 sendet zur zeitlichen Synchronisation von der ersten Funkzelle FZ1 zugeordneten Teilnehmern, hier nicht dargestellt, über einen SCH-Übertragungskanal einen SCH-Burst SCHB1 als Synchronisationssignal aus.

Entsprechendes gilt für die der ersten Funkzelle FZ1 benachbarten Basisstationen BTS2 bis BTS7 der Funkzellen FZ2 bis FZ7, die zur Synchronisierung der Funkkommunikationsendgeräte von Teilnehmern TN2 bis TN7 entsprechend als Synchronisationssignale SCH-Bursts SCHB2 bis SCHB7 aussenden.

Im Rahmen des Nachbarzellen-Monitoring werden am Funkkommunikationsendgerät des ersten Teilnehmers TN1 die SCH-Bursts SCHB2 bis SCHB7 der benachbarten Basisstationen BTS2 bis BTS7 empfangen und zur Gewinnung von Synchronisationsgraden ausgewertet.

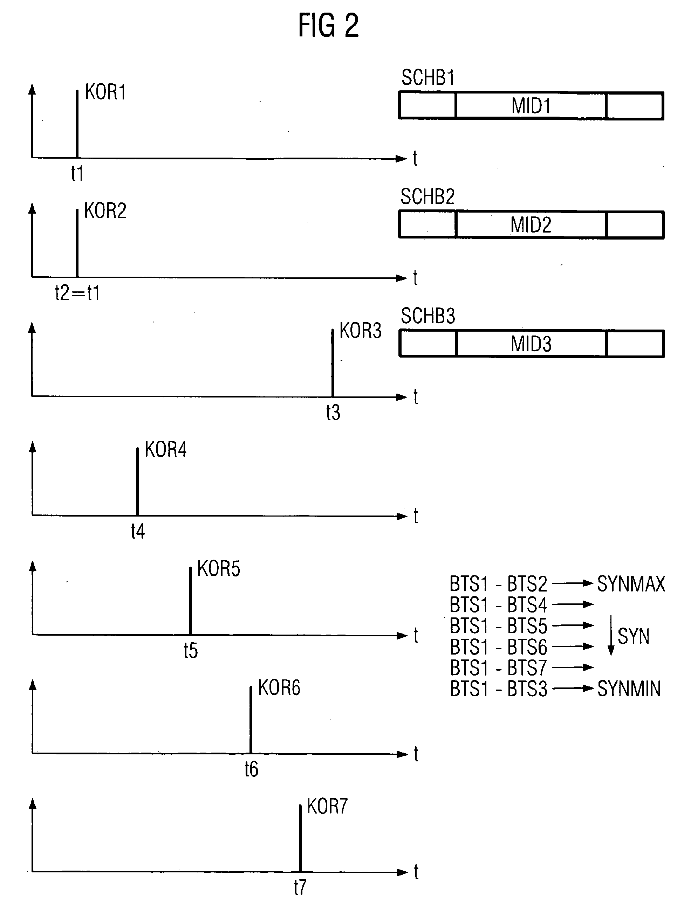

FIG 2 zeigt eine Ermittlung von Synchronisationsgraden der in FIG 1 dargestellten Basisstationen BTS1 bis BTS7.

Mit Hilfe eines Kreuz-Korrelationsverfahrens wird aus einer erweiterten Midamble MID1 bis MID7 (Trainingssequenz) jedes SCH-Bursts SCHB1 bis SCHB7 jeweils ein der entsprechenden Basisstation zuordenbarer Korrelationspeak KOR1 bis KOR7 gewonnen, der eine zeitliche Ablage zum Korrelationspeak KOR1 des ersten SCH-Bursts SCHB1 aufweist.
Die Differenz zwischen einem betrachteten Korrelationspeak KOR2 bis KOR7 zum Korrelationspeak KOR1 ist ein Maß für den Synchronisationsgrad der Basisstationen BTS2 bis BTS7 zur ersten Basisstation BTS1.

Hier ist beispielsweise die erste Basisstation BTS1 zu einer zweiten Basisstation BTS2 ideal zeitlich synchronisiert, weshalb diesen beiden Basisstationen BTS1 und BTS2 ein maximaler Synchronisationsgrad SYNMAX zugeordnet wird. Im Gegensatz dazu ist eine dritte Basisstation BTS3 zur ersten Basisstation BTS1 zeitlich nicht synchronisiert, weshalb diesen beiden Basisstationen BTS1 und BTS3 ein minimaler Synchronisationsgrad SYNMIN zugeordnet wird.

Die Basisstationen BTS4 bis BTS7 weisen einen Verlauf in der zeitlichen Synchronisation zur ersten Basisstation BTS1 auf, weshalb entsprechenden Basisstationspärchen entsprechend verlaufende, d.h. entsprechend abgestufte Synchronisationsgrade SYN zugeordnet werden.

Die Abstufung bzw. die Auflösung zwischen SYNMIN und SYNMAX ist systembedingt festlegbar.

Basierend auf den Synchronisationsgraden wird am Funkkommunikationsendgerät des ersten Teilnehmers TN1 ein Interferenzunterdrückungsverfahren ausgewählt, das für den jeweils ermittelten Synchronisationsgrad optimiert ist. So wird am Funkkommunikationsendgerät des Teilnehmers TN1 für störende Teilnehmersignale anhand des Synchronisationsgrades SYNMAX des Basisstationspärchens BTS1-BTS2 ein Interzell-Interferenzunterdrückungsverfahren verwendet, das für zeitlich zueinander synchrone und einander störende Teilnehmersignale optimal geeignet ist - hier beispielsweise für das den Teilnehmer TN1 störende Teilnehmersignal TN2.

Anhand des Synchronisationsgrades des Basisstationspärchens BTS1-BTS3 wird hingegen ein Interzell-Interferenzunterdrückungsverfahren verwendet, das für zeitlich nichtsynchrone und einander störende Teilnehmersignale optimal geeignet ist - hier beispielsweise für das den Teilnehmer TN1 störende Teilnehmersignal TN3.

Anhand der ermittelten Synchronisationsgrade der Funkzellen FZ2 bis FZ7 ist auch ein mehrere einzelne Interferenzunterdrückungsverfahren beinhaltendes gemeinsames Interferenzunterdrückungsverfahren anwendbar, mit dessen Hilfe störende Teilnehmersignale TN2 bis TN7 gemeinsam beim Funkkommunikationsendgerät des Teilnehmers TN1 eliminiert werden. Bedarfsweise werden die ermittelten Synchronisationsgrade gemittelt.

## Patentansprüche

1. Verfahren zur Interferenzunterdrückung an einem Funkkommunikationsendgerät eines Funkkommunikationssystems,
- bei dem das Funkkommunikationsendgerät, das einer ersten Basisstation einer ersten Funkzelle zugeordnet ist, Synchronisationssignale von Basisstationen benachbarter Funkzellen überwacht und zeitliche Abweichungen der Synchronisationssignale jeder benachbarten Basisstationen zum Synchronisationssignal der ersten Basisstation bestimmt,
- bei dem anhand der zeitlichen Abweichung jeweils ein Synchronisationsgrad als Maß für die zeitliche Synchronisation einer benachbarten Basisstation zur ersten Basisstation gebildet wird, und
- bei dem abhängig von den Synchronisationsgraden am Funkkommunikationsendgerät wenigstens eines von mehreren Interferenzunterdrückungsverfahren ausgewählt wird.

2. Verfahren nach Anspruch 1, bei dem zur Interferenzunterdrückung ein adaptiver Algorithmus verwendet wird, der verschiedene Interferenzunterdrückungsverfahren abhängig vom Synchronisationsgrad der benachbarten Basisstationen anwendet.

3. Verfahren nach Anspruch 1 oder 2, bei dem die ermittelten Synchronisationsgrade vom Funkkommunikationsendgerät an eine Netzwerkseite des Funkkommunikationssystems übertragen werden.

4. Verfahren nach Anspruch 3, bei dem netzwerkseitig anhand des Synchronisationsgrades Basisstationen mit mangelhafter Synchronisation ermittelt und deren Synchronisationssignal entsprechend nachjustiert werden.

5. Verfahren nach Anspruch 3 oder 4, bei dem netzwerkseitig eine Zuteilung von Funkübertragungsressourcen an ein Funkkommunikationsendgerät in Abhängigkeit vom Synchronisationsgrad der benachbarten Basisstationen durchgeführt wird.

6. Verfahren nach einem der Ansprüche 3 bis 5, bei dem der Synchronisationsgrad als zusätzlicher Wert bei einer Positionsbestimmung des Funkkommunikationsendgeräts verwendet wird.

7. Verfahren nach einem der vorhergehenden Ansprüche, bei dem als Funkkommunikationssystem ein GSM/GERAN-Mobilfunksystem verwendet wird.

8. Verfahren nach Anspruch 7, bei dem als Synchronisationssignal ein SCH-Burst mit erweiterter Midamble-Bitfolge verwendet und ausgewertet wird.
